# EUROPEAN PATENT SPECIFICATION

(11) **EP 3 823 480 B1**
(45) Date of publication and mention of the grant of the patent: **07.09.2022**
(21) Application number: 19755980.0
(22) Date of filing: 19.07.2019
(51) Int. Cl.: A24F 47/00, B25J 15/00, B65B 57/10

(54) **SYSTEM FOR PROCESSING DEVICE PARTS OF SIMULATED SMOKING DEVICES**
SYSTEM ZUR BEARBEITUNG VON TEILEN VON GERÄTEN ZUM SIMULIERTEN RAUCHEN
SYSTÈME POUR LE TRAÎTEMENT DE PIÈCES DE DISPOSITFS PERMETTANT DE FUMER DE MANIÈRE ARTIFICIELLE

(30) Priority: 19.07.2018 NL 2021349
(43) Date of publication of application: 26.05.2021
(73) Proprietor: Sluis Cigar Machinery B.V., 8263 BC Kampen (NL)
(72) Inventor: SLURINK, Oscar, 8141 AJ HEINO (NL)
(74) Representative: EP&C
(86) International application number: PCT/NL2019/050466
(87) International publication number: WO 2020/017972

(56) References cited:
- US-A1- 2016 338 408
- US-A1- 2018 170 588
- US-A1- 2018 170 688

## Description

### FIELD OF THE INVENTION

The invention relates to a system for processing device parts of simulated smoking devices, such as cartridges of electronic cigarettes. The system may comprise a processing station, an evaluation station, a transporter and a controller.

### BACKGROUND OF THE INVENTION

The invention is based on the insight that in practice the processing station and/or the evaluation station may not always function correctly. Therefore, there is a need to determine if the processing and/or the evaluation station function correctly. US 2016/338408 A1 discloses a system according to the preamble of claim 1.

### SUMMARY OF THE INVENTION

The invention has the objective to provide an improved or at least alternative processing device parts of simulated smoking devices.

This objective is reached by a system for processing device parts of simulated smoking devices, such as cartridges of electronic cigarettes, said system comprising;
- a processing station to perform a processing operation on each of the device parts of a batch of device parts, which batch has a batch number of device parts being larger than one,
- an evaluation station to evaluate the result of the processing operation on each device part of the batch, which evaluation station is configured to provide an evaluation signal for each device part of the batch,
- a transport device to move the device parts of the batch along a production trajectory, which production trajectory extends through the processing station, the evaluation station and an isolating station,
- a controller which is in communication with the evaluation station and the isolating station, wherein:
   -- the transport device is configured to position the processed device parts of the batch in an isolating number of isolating positions located in an isolating trajectory part of the production trajectory, which isolating trajectory part extends through the isolating station,
   -- the isolating station comprises a gripper having gripping members defining a gripping number of gripping positions of the gripper,
   -- the gripper is configured to grip with the gripping members device parts located in the gripping positions,
   -- the isolating station comprises a gripper mover configured to move the gripper from an engaging position into a rejecting position, and vice versa,
   -- in the engaging position of the gripper, the device parts of the batch located in the isolating positions are also located in the gripping positions of the gripper,
   -- the rejecting position of the gripper is located at a rejecting distance from the engaging position and allows the gripper to discharge gripped device parts into a rejection area,
   -- the controller is configured to determine on the basis of the evaluation signals on which of the device parts of the batch located in the isolating positions the processing station has not correctly carried out the processing operation,
   -- the isolating station is configured to grip with the gripper and based on the determination of the controller one or more device parts of the batch located in the isolating positions on which the processing operation has not been carried out correctly by the processing station and to discharge said gripped one or more device parts into the rejection area,
   -- the gripper mover is configured to also move the gripper from the engaging position into a testing position, and vice versa,
   -- the testing position is located at a sample distance from the engaging position and differs from the rejecting position,
   -- the system comprises a user interface allowing a user to select one of the device parts of the batch, which user interface is in communication with the controller and configured to provide a selection signal,
   -- the controller is configured to determine on the basis of the selection signal which one of the device parts of the batch has been selected via the user interface,
   -- the isolating station is configured to grip with the gripper and based on the determination of the controller the one of the device parts of the batch being selected via the user interface and located in one of the isolating positions in order to positon said gripped device part in a sample position.

The isolating station does not only allow that device parts on which the processing operation has not been carried out correctly are rejected, but also that a sample can be taken to independently check if the processing station and the evaluation station are operating correctly. The isolating station allows this in an efficient manner while having a simple construction. In addition, it is also possible to check the sample which has been taken by the isolating station on other characteristics.

In an embodiment of the system, the gripper is configured to position the gripped device part being selected via the user interface in the sample position while the gripper is positioned in the testing position.

In an embodiment of the system, the controller is in communication with the transport device, one of the isolating positions defines a predetermined selecting position, the controller and the transport device are configured to position the one of the device parts being selected via the user interface in the predetermined selecting position, the isolating station is configured to grip with the gripper the one of the device parts of the batch located in the predetermined selecting position and being selected via the user interface in order to positon said gripped device part in the sample area.

In an embodiment of the system, the directions of movement of the gripper between and into the engaging position and the rejecting position and between and into the engaging position and the testing position all extend in a virtual flat plane.

In an embodiment of the system, the engaging position, the rejecting position, the engaging position and the sample position are located in the virtual flat plane

In an embodiment of the system, the virtual flat plane is located at a fixed position along the production trajectory.

In an embodiment of the system, the transport device is configured to hold the device parts of the batch during the movement along the production trajectory in a predetermined orientation, such as in an upright orientation.

In an embodiment of the system, the gripper is configured to hold the gripped device parts located in the gripping positions in the predetermined orientation.

In an embodiment of the system, the gripper mover is configured to move the gripper between the engaging position and the testing position while keeping the gripped device part located in the gripping position and being selected via the user interface in the predetermined orientation.

In an embodiment of the system, the gripper mover is configured to, when located in the testing position, position the gripped device part located in the gripping position and being selected via the user interface in the sample position while keeping said device part in the predetermined orientation.

In an embodiment of the system, the gripper mover is configured to move the gripper between the engaging position and the rejecting position while keeping the gripped device parts located in the gripping positions in the predetermined orientation.

In an embodiment of the system, the system comprises a sample device having a part holder to hold one of the device parts, the sample device is configured to move the part holder from a retracted position into an extended position, and vice versa, the sample position is defined by the part holder located in the retracted position, the system comprises a safety cover forming a safety boundary between a system area in which the transport device, the processing station, the evaluation station, and the isolating station are located, and a user area, the safety cover comprises a sample opening through which the sample device extends, and the part holder located in the retracted position is located in the system area and the part holder located in the extended position is located in the user area.

In an embodiment of the system, the part holder is configured to hold the device part in the predetermined orientation.

In an embodiment of the system, the sample device is configured to move the part holder from the retracted position into the extended position while keeping the device part held by the part holder in the predetermined orientation.

In an embodiment of the system, each gripping position of the gripper is located between one of the gripping members and an associated support surface, and each gripping member comprises a pushing surface which is movable from a receiving position at a receiving distance from its associated support surface into a pushing position at a smaller pushing distance from its associated support surface, and vice versa.

In an embodiment of the system, the gripper is configured to receive the device parts of the batch located in the isolating positions when the pushing surfaces of the gripping members are located in the receiving position and to grip the device parts of the batch located in the isolating positions when the pushing surfaces of the gripping members are located in the pushing position.

In an embodiment of the system, the gripper is configured to clamp device parts between gripping members with the pushing surfaces located in the pushing position and the associated support surfaces.

In an embodiment of the system, the associated support surfaces partly surround the device parts.

In an embodiment of the system, each gripping member comprises a bellow having an exterior surface which forms the pushing surface of said gripping member, the system comprises a fluid pressure device connected to the bellows to individually adjust a fluid pressure in the bellows in order to move the pushing surfaces of the bellows from the receiving position into the pushing position, and vice versa, and the fluid pressure device is controlled by the controller.

In an embodiment of the system, the transport device moves the device parts along the production trajectory in an intermittent manner.

In an embodiment of the system, the intermittent manner in which transport device moves the device parts along the production trajectory corresponding to the batch number of the batch of device parts.

In an embodiment of the system, the isolating number of the isolating positions corresponds to the batch number of the batch of device parts, and the gripping number of the gripping positions of the gripper corresponds to the isolating number.

In an embodiment of the system, the processing station is a filling station to discharge a predetermined amount of fluid in each of the device parts of the batch of device parts, and the evaluation station is configured to check a filling characteristic of each device part of the batch.

In an embodiment of the system, the evaluation station is a weighing station to individually weigh the device parts filled by the filling station, which weighing station provides a measurement signal for each of the device parts, and the controller is configured to determine if the predetermined amount of fluid has been discharged in each of the device parts on the basis of the measurement signals.

In an embodiment of the system, the device parts of the batch comprise a fluid chamber to hold the fluid and a filling opening having an open connection with the fluid chamber and an surrounding area of said device parts.

In an embodiment of the system, the filling opening is located at an upper part of the device part.

In an embodiment of the system, the isolating station is configured to grip with the gripper only one or more device parts of the batch located in the isolating positions on which the processing operation has not been carried out correctly by the processing station or only the one of the device parts of the batch being selected via the user interface and located in one of the isolating positions, and the transport device is configured to move the device parts which are not gripped by the gripper further along the production trajectory.

### BRIEF DESCRIPTION OF THE INVENTION

Embodiments of the system according to the invention will be described by way of example only, with reference to the accompanying schematic drawings in which corresponding reference symbols indicate corresponding parts, and in which:
Figure 1 schematically shows a general representation of an embodiment of the system according to the invention,
Figure 2 schematically shows a view in perspective of the system of figure 1,
Figure 3 schematically shows the view of figure 1 without the safety cover,
the Figures 4A-C schematically show top views of the system of figure 1,
the Figures 5A-D schematically show views in perspective of the isolating station of the system of figure 1,
the Figures 6A-G schematically show views in perspective of the isolating station of the system of figure 1,
the Figures 7A-C schematically show views in perspective of the sample device of the system of figure 1,
the Figures 8A-B schematically show views in perspective of the sample device of the system of figure 1,
Figure 9A schematically shows a view in perspective of the gripper of the system of figure 1, the Figures 9B-C schematically show bottom view of the gripper of figure 9A,
Figure 10A schematically shows a view in perspective of the device part of the system of figure 1, and
Figure 10B schematically shows a view in cross section of the device part of figure 10A.

### DETAILED DESCRIPTION OF THE INVENTION

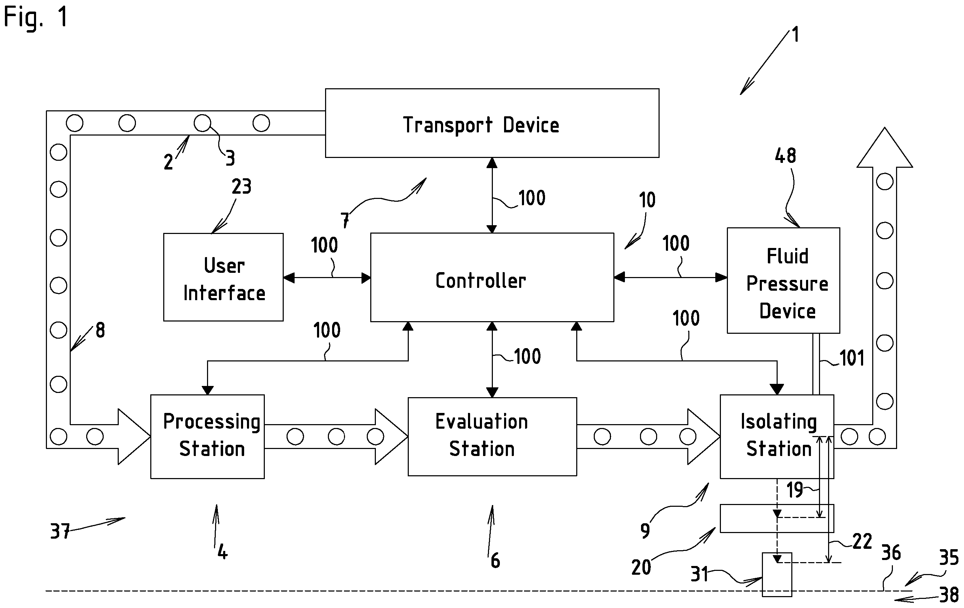

Figure 1 shows a general representation of an embodiment of the system 1 according to the invention. The system 1 will be explained in relation to the general representation with references to more detailed figures.

The system 1 is configured to process device parts 2 of simulated smoking devices, such as cartridges 3 of electronic cigarettes. It will be clear to the skilled person that the device parts 2 of this system 1 can also relate to simulated smoking devices which are completely constructed but on which a further processing step (such as testing) will be applied before they are sold.

The system 1 comprise a processing station 4 to perform a processing operation on each of the device parts 2 of a batch 5 of device parts 2, which batch 5 has a batch number of device parts 2 being larger than one. In the shown situation, the batch number is ten.

An evaluation station 6 is provided to evaluate the result of the processing operation on each device part 2 of the batch 5, which evaluation station 6 is configured to provide an evaluation signal for each device part 2 of the batch 5.

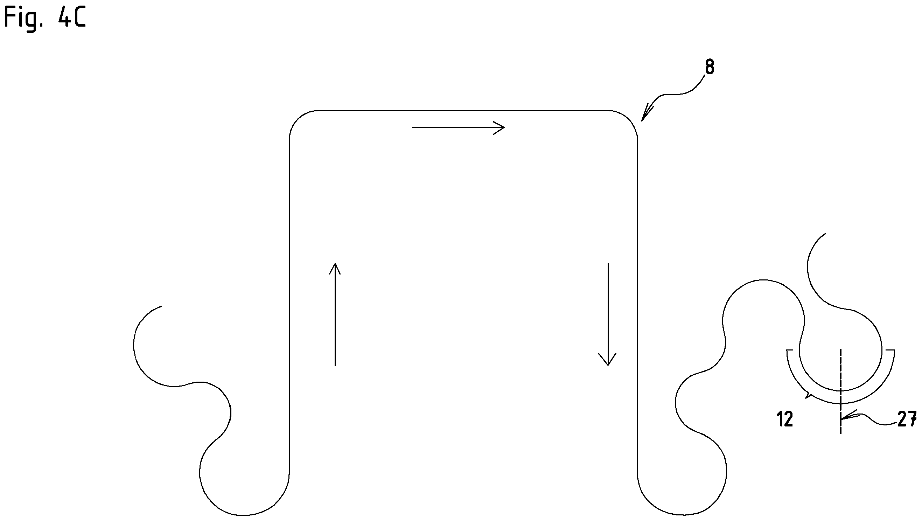

A transport device 7 moves the device parts 2 of the batch 5 along a production trajectory 8 (see figure 4C), which production trajectory 8 extends through the processing station 4, the evaluation station 6 and an isolating station 9.

The system 1 comprises a controller 10 which is via communication lines 100 in communication with the transport device 7, the processing station 4, the evaluation station 6, the isolating station 9, a fluid pressure device 48 and a user interface 23.

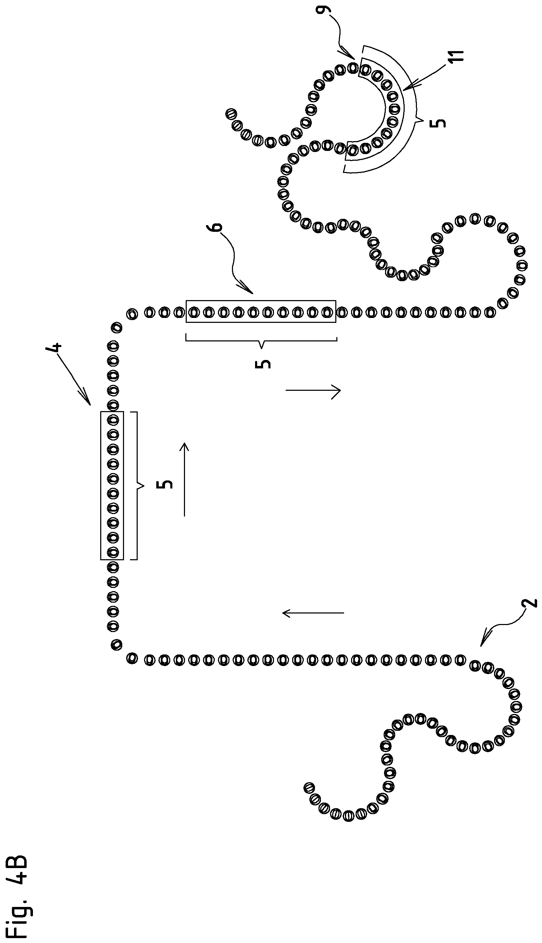

The transport device 7 is configured to position the processed device parts 2 of the batch 5 in an isolating number of isolating positions 11 located in an isolating trajectory part 12 of the production trajectory 8, which isolating trajectory part 12 extends through the isolating station 9 (see the figures 4B and C).

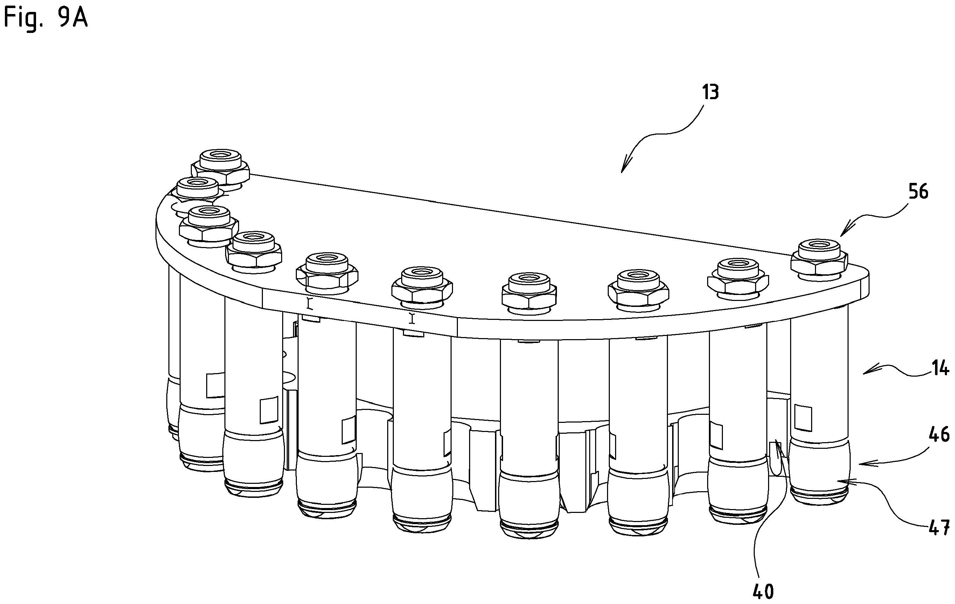

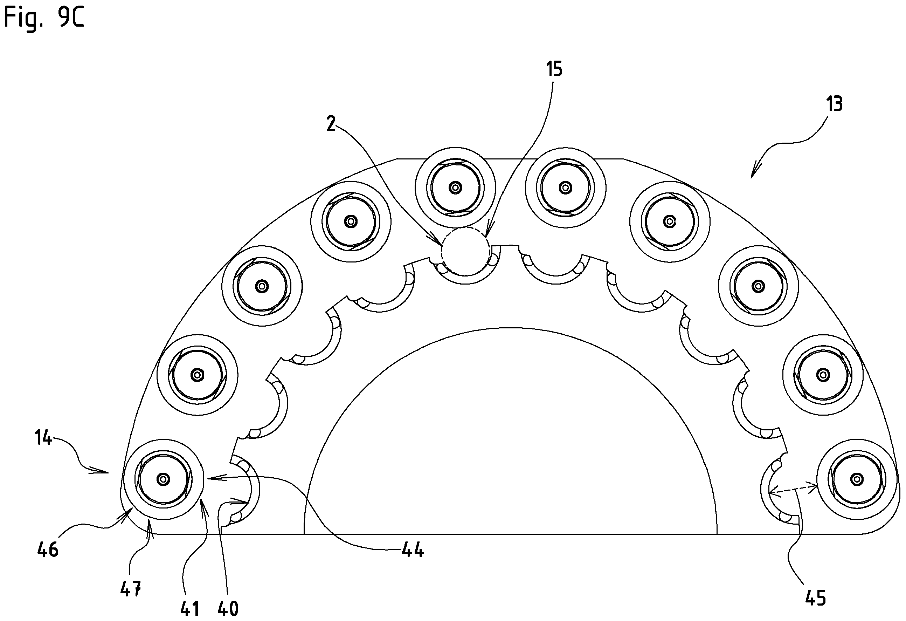

The isolating station 9 comprises a gripper 13 having gripping members 14 defining a gripping number of gripping positions 15 of the gripper 13 (see the figures 9A-C). The gripper 13 is configured to grip with the gripping members 14 device parts 2 located in the gripping positions 15.

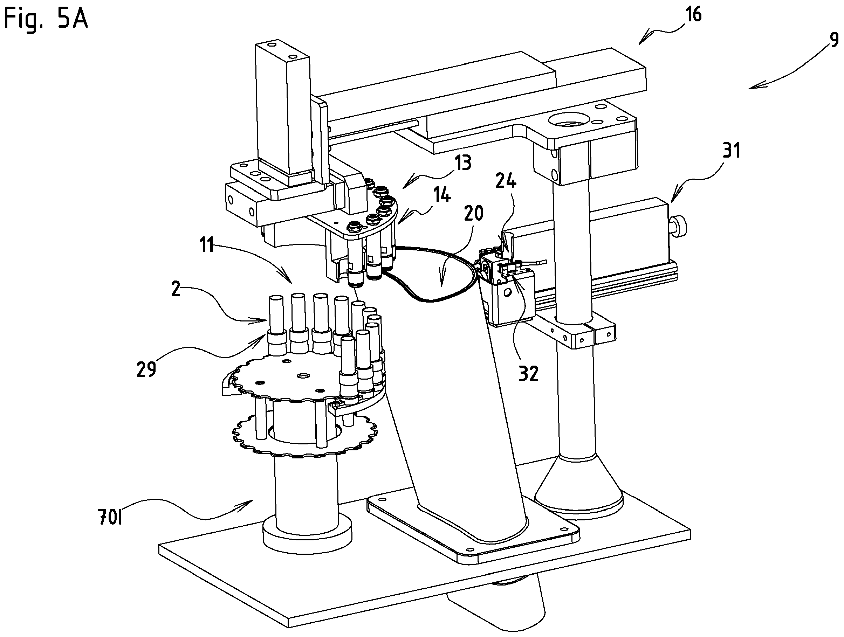

The isolating station 9 comprises a gripper mover 16 configured to move the gripper 13 from an engaging position 17 into a rejecting position 18, and vice versa (see the figures 5A-D). In the engaging position 17 of the gripper 13, the device parts 2 of the batch 5 located in the isolating positions 11 are also located in the gripping positions 15 of the gripper 13. The rejecting position 18 of the gripper 13 is located at a rejecting distance 19 from the engaging position 17 and allows the gripper 13 to discharge gripped device parts 2 into a rejection area 20.

The controller 10 is configured to determine on the basis of the evaluation signals on which of the device parts 2 of the batch 5 located in the isolating positions 11 the processing station 4 has not correctly carried out the processing operation.

The isolating station 9 is configured to grip with the gripper 13 and based on the determination of the controller 10 one or more device parts 2 of the batch 5 located in the isolating positions 11 on which the processing operation has not been carried out correctly by the processing station 4 and to discharge said gripped one or more device parts 2 into the rejection area 20.

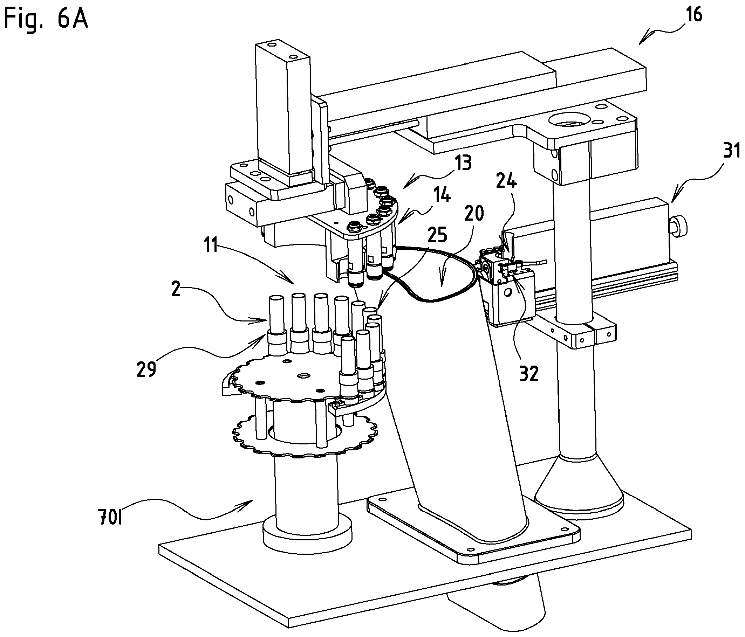

The gripper mover 16 is configured to also move the gripper 13 from the engaging position 17 into a testing position 21, and vice versa (see the figures 6A-G). The testing position 21 is located at a sample distance 22 from the engaging position 17 and differs from the rejecting position 18.

The system 1 is provided with the user interface 23 allowing a user to select one of the device parts 2 of the batch 5. The user interface 23 is in communication with the controller 10 and configured to provide a selection signal.

The controller 10 is configured to determine on the basis of the selection signal which one of the device parts 2 of the batch 5 has been selected via the user interface 23. The isolating station 9 is configured to grip with the gripper 13 and based on the determination of the controller 10 the one of the device parts 2 of the batch 5 being selected via the user interface 23 and located in one of the isolating positions 11 in order to positon said gripped device part in a sample position 24.

The gripper 13 is configured to position the gripped device part being selected via the user interface 23 in the sample position 24 while the gripper 13 is positioned in the testing position 21.

The isolating station 9 does not only allow that device parts 2 on which the processing operation has not been carried out correctly are rejected, but also that a sample can be taken to independently check if the processing station 4 and the evaluation station 6 are operating correctly. The isolating station 9 allows this in an efficient manner while having a simple construction. In addition, it is also possible to check the sample which has been taken by the isolating station 9 on other characteristic.

The processing station 4 is a filling station 49 to discharge a predetermined amount of fluid in each of the device parts 2 of the batch 5 of device parts 2. The evaluation station 6 is configured to check a filling characteristic of each device part of the batch 5. More specifically, the evaluation station 6 is a weighing station 50 to individually weigh the device parts 2 filled by the filling station 49, which weighing station 50 provides a measurement signal for each of the device parts 2, and the controller 10 is configured to determine if the predetermined amount of fluid has been discharged in each of the device parts 2 on the basis of the measurement signals.

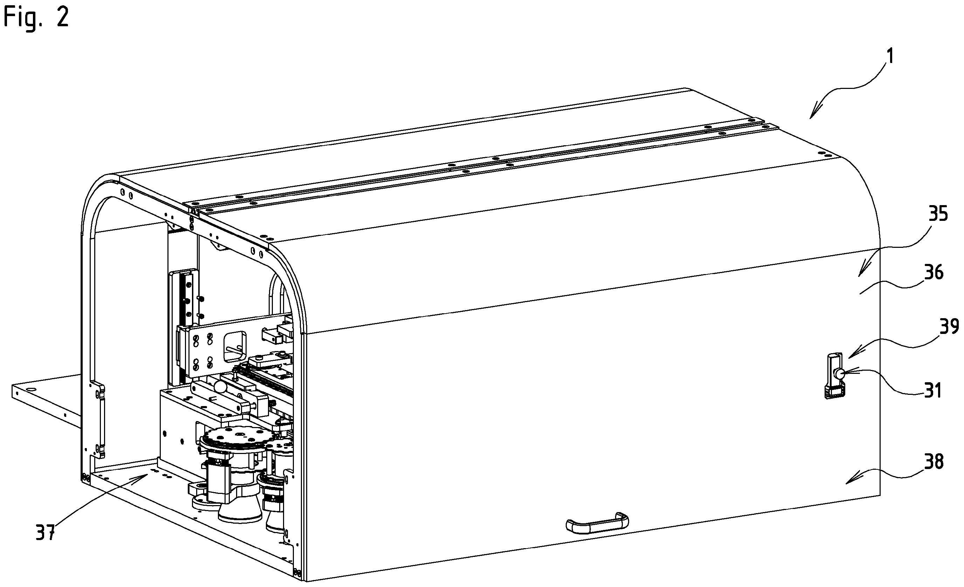

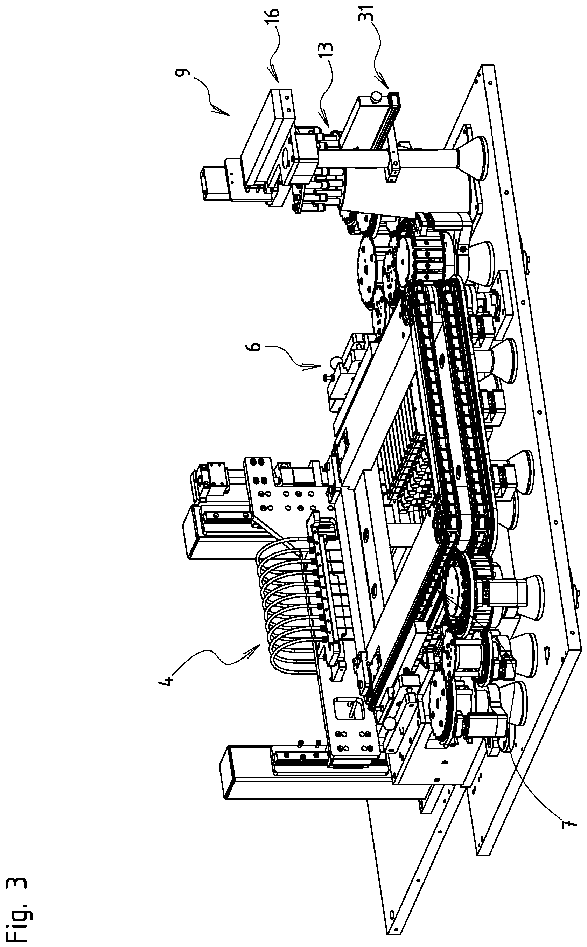

Figure 2 shows a view in perspective of the system 1 of figure 1. The system 1 comprises a safety cover 35 forming a safety boundary 36 between a system area 37 in which the transport device 7, the processing station 4, the evaluation station 6, and the isolating station 9 are located, and a user area 38. The safety cover 35 comprises a sample opening 39 through which a sample device 31 extends. Figure 3 shows the same system 1 without the safety cover 35.

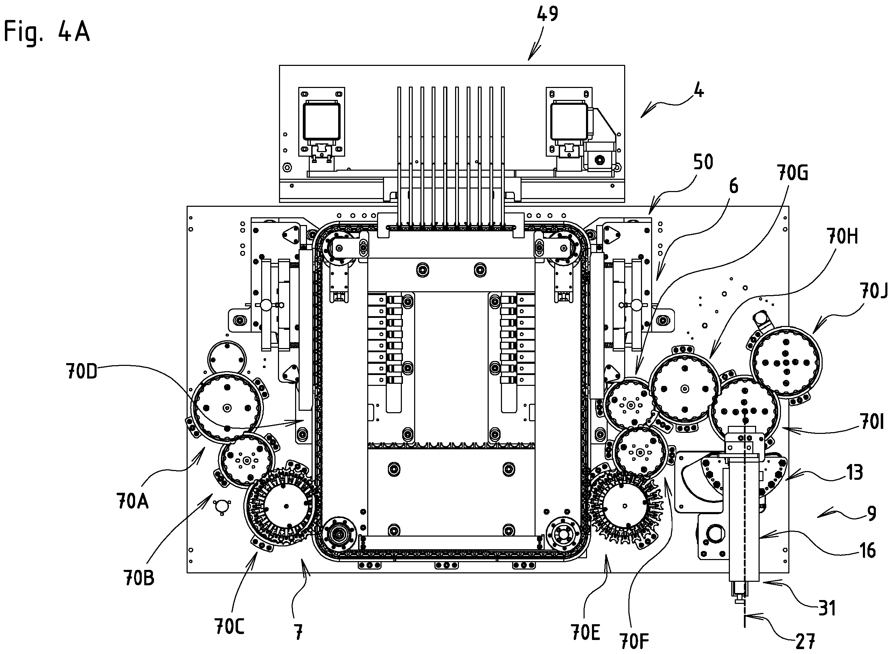

Figure 4A schematically shows a top view of the system 1 of figure 1. The transport device 7 comprises ten transport units 70A-J which together transport the device parts 2 along the production trajectory 8. The transport device 7 moves the device parts 2 along the production trajectory 8 in an intermittent manner. The intermittent manner in which transport device 7 moves the device parts 2 along the production trajectory 8 corresponding to the batch number of the batch 5 of device parts 2. Figure 4B shows the batches 5 of devices parts positioned one after the other along the production trajectory 8. Figure 4C shows the production trajectory 8 and the isolating trajectory part 12.

The figures 5A-D show views in perspective of the isolating station 9 of the system 1 of figure 1.

In figure 5A, the processed device parts 2 of the batch 5 are positioned in the isolating number of isolating positions 11 located in the isolating trajectory part 12 of the production trajectory 8. The isolating number of the isolating positions 11 corresponds to the batch number of the batch 5 of device parts 2.

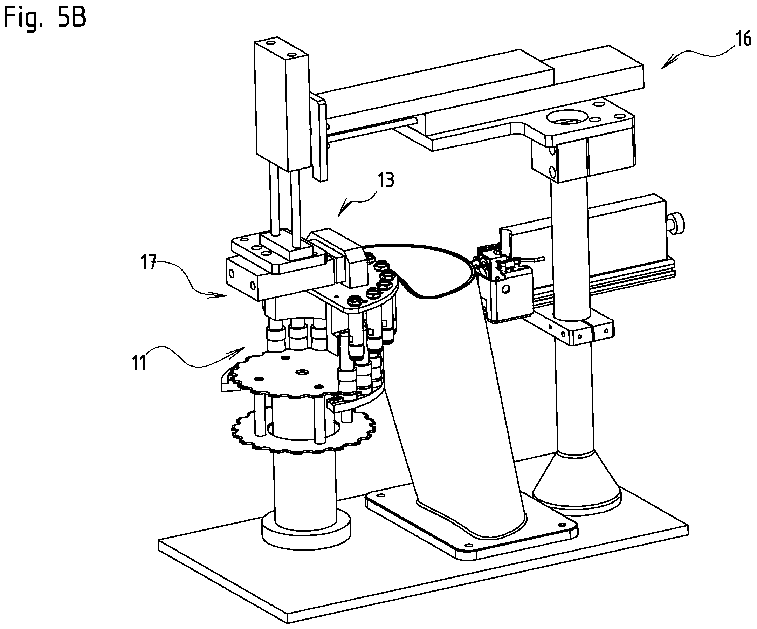

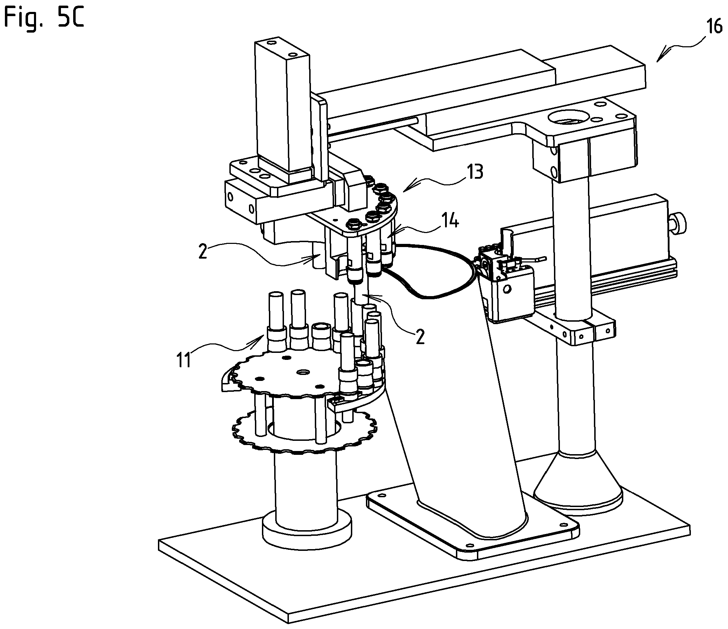

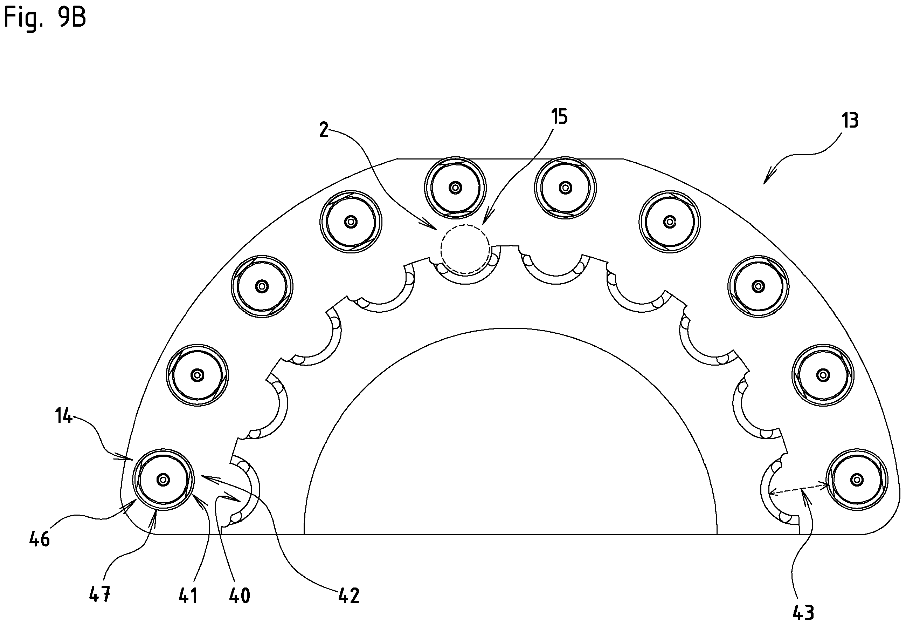

In figure 5B, the gripper 13 is moved with the gripper mover 16 into the engaging position 17, due to which the device parts 2 of the batch 5 located in the isolating positions 11 are also located in the gripping positions 15 of the gripper 13 (see also figure 9B). The gripping number of the gripping positions 15 of the gripper 13 corresponds to the isolating number. The controller 10 has determined on the basis of the evaluation signals on which of the device parts 2 of the batch 5 located in the isolating positions 11 the processing station 4 has not correctly carried out the processing operation. The isolating station 9 grips with the gripper 13 and based on the determination of the controller 10 two device parts 2 of the batch 5 located in the isolating positions 11 on which the processing operation has not been carried out correctly by the processing station 4 to discharge said gripped device parts 2 into the rejection area 20. The movement of the gripper 13 towards the rejection area 20 is shown in figure 5C. The transport device 7 moves the device parts 2 which are not gripped by the gripper 13 further along the production trajectory 8.

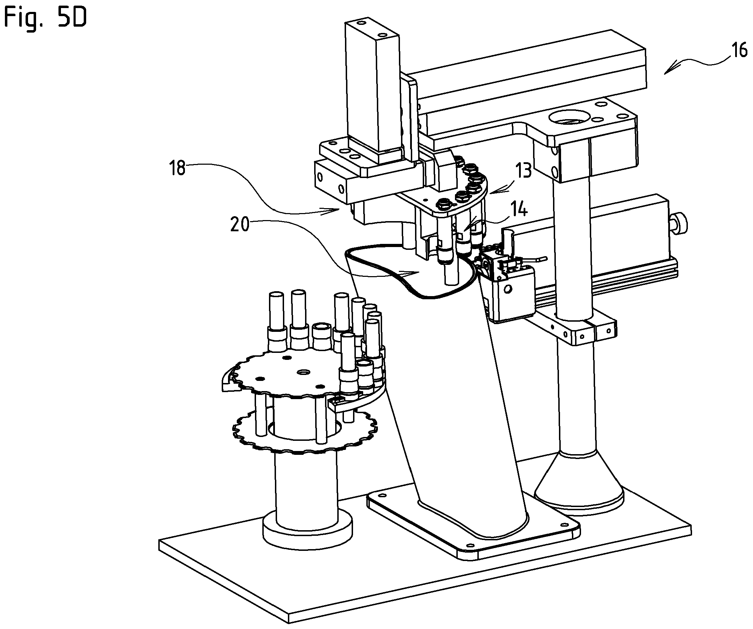

In figure 5D, the gripper 13 is located in the rejecting position 18. The rejection position of the gripper 13 is located at a rejecting distance 19 from the engaging position 17 and allows the gripper 13 to discharge gripped device parts 2 into a rejection area 20. The gripper 13 will release the gripped device parts 2 to discharge them in the rejection area 20.

In figure 6A, the processed device parts 2 of the batch 5 are positioned in the isolating number of isolating positions 11 located in the isolating trajectory part 12 of the production trajectory 8. One of the isolating positions 11 (in this case the fifth isolating position) defines a predetermined selecting position 25. This means that the sample taking indicated via the user interface 23 will take place at the predetermined selection position.

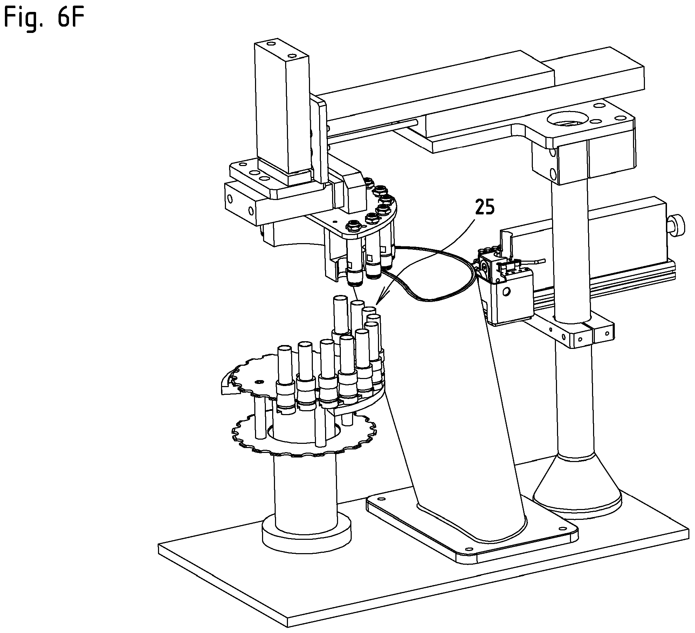

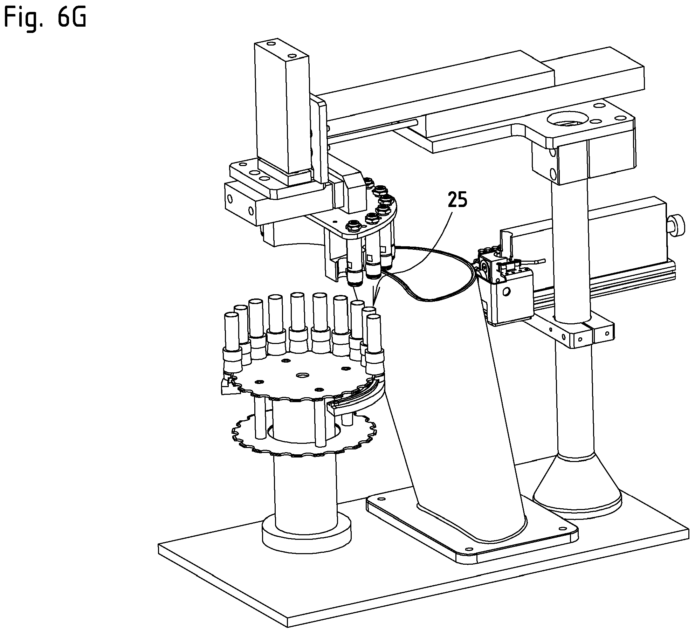

The controller 10 and the transport device 7 are configured to position the one of the device parts 2 being selected via the user interface 23 in the predetermined selecting position 25. The figures 6F and G show how other device parts 2 selected via the user interface 23 are positioned in the predetermined selecting position 25.

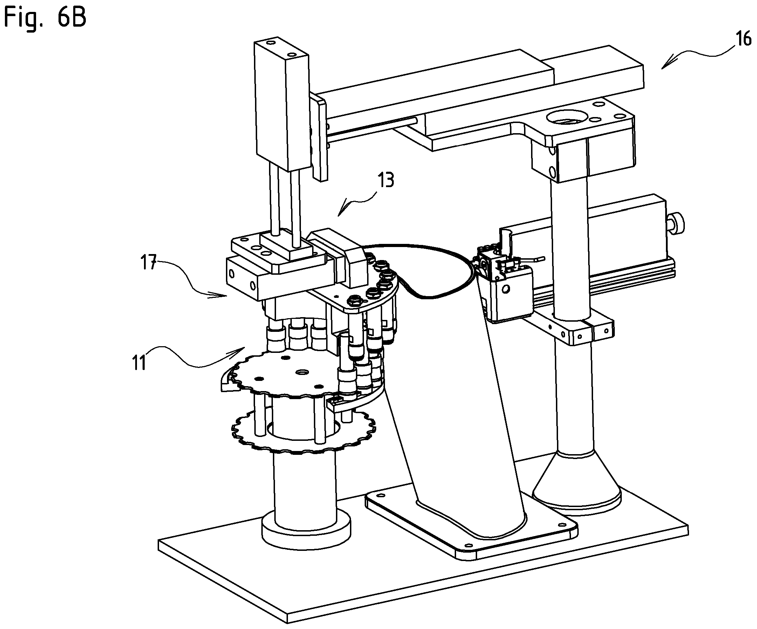

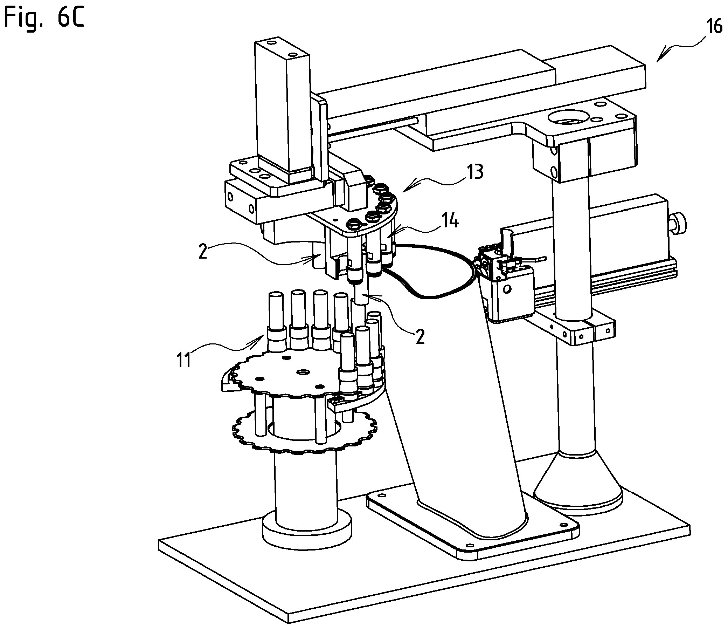

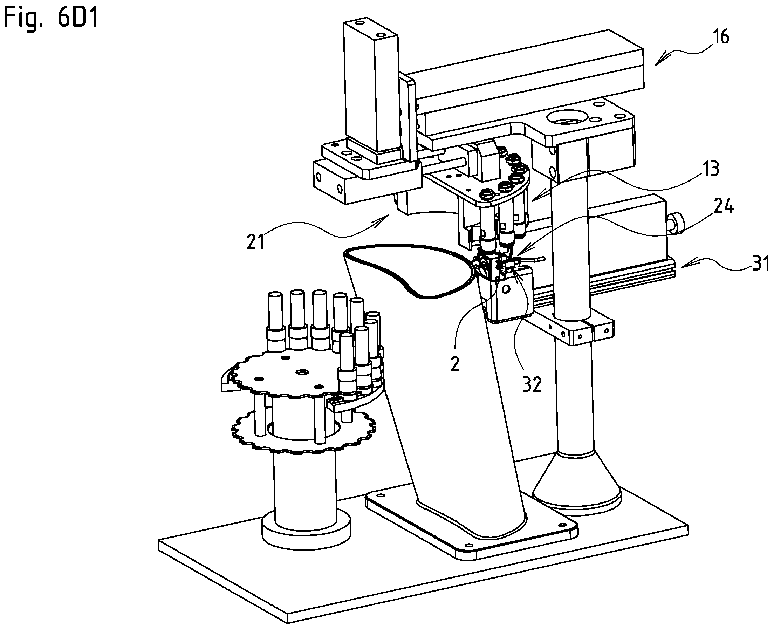

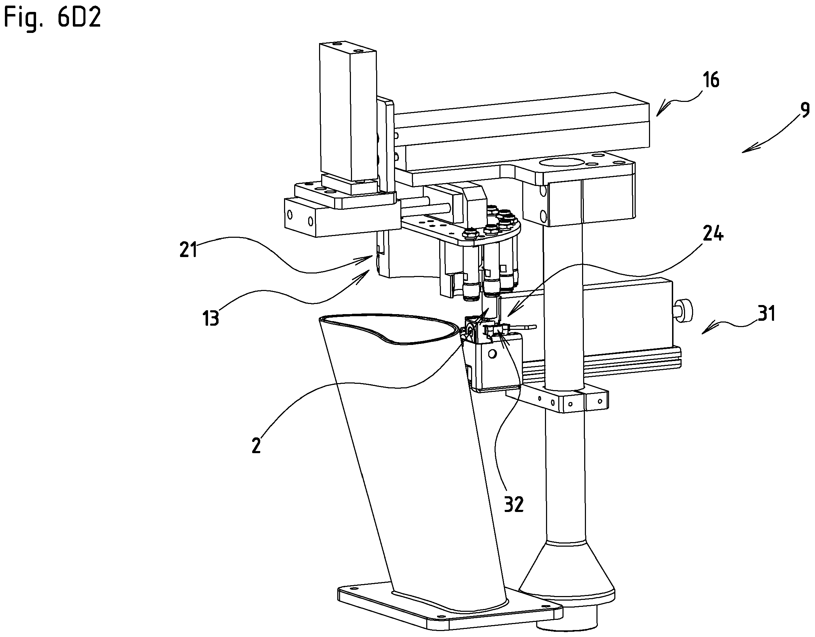

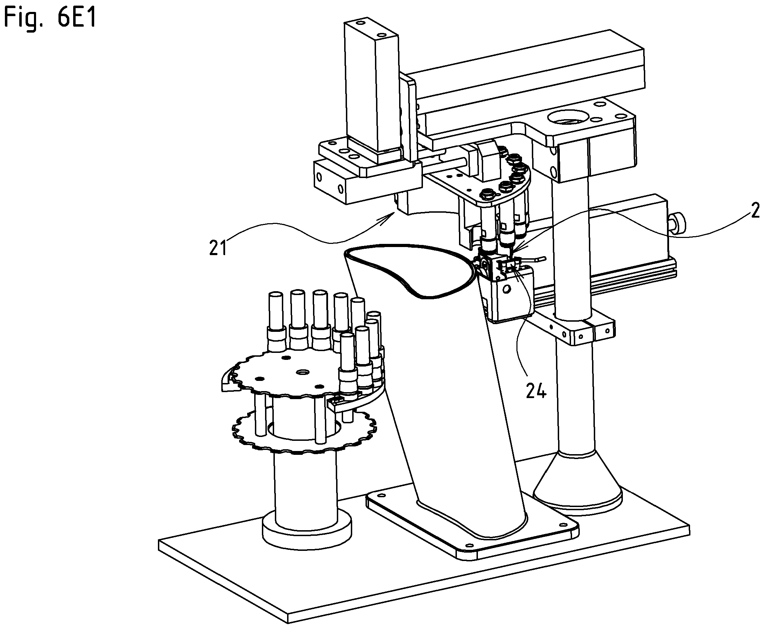

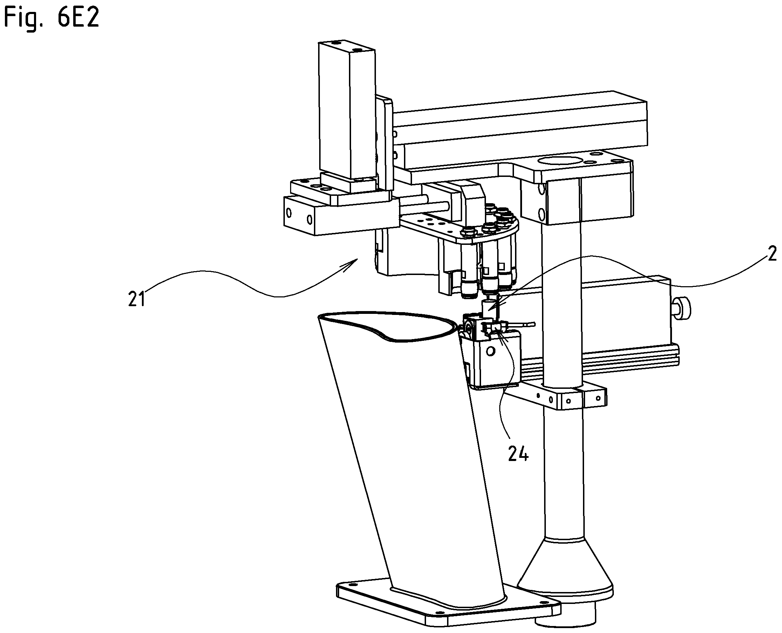

The isolating station 9 is configured to grip with the gripper 13 the one of the device parts 2 of the batch 5 located in the predetermined selecting position 25 and being selected via the user interface 23 in order to positon said gripped device part 2 in the sample area. The gripping of said device part located in the predetermined selecting position 25 is shown in figure 6B. In figure 6C, the gripper 13 and the gripped device part is moving towards the sample position 24. The gripper 13 has arrived at the testing position 21 in figure 6D1. The same situation is shown at a different viewing angle in figure 6D2. In the figures 6E1 and 6E2, the gripper 13 has released its grip on the device part in order to position it in the sample position 24. The transport device 7 moves the device parts 2 which are not gripped by the gripper 13 further along the production trajectory 8.

The directions of movement of the gripper 13 between and into the engaging position 17 and the rejecting position 18 and between and into the engaging position 17 and the testing position 21 all extend in a virtual flat plane 27 (see the figures 4A and C). The engaging position 17, the rejecting position 18, the engaging position 17 and the sample position 24 are located in the virtual flat plane 27. The virtual flat plane 27 is located at a fixed position along the production trajectory 8. This means that the isolating station 9 is not moved along the production trajectory 8.

The transport device 7 is configured to hold the device parts 2 of the batch 5 during the movement along the production trajectory 8 in a predetermined orientation 29, more specifically in an upright orientation. The gripper 13 is configured to hold the gripped device parts 2 located in the gripping positions 15 in the predetermined orientation 29. The gripper mover 16 is configured to move the gripper 13 between the engaging position 17 and the testing position 21 while keeping the gripped device part located in the gripping position and being selected via the user interface 23 in the predetermined orientation 29. The gripper mover 16 is configured to, when located in the testing position 21, position the gripped device part 2 located in the gripping position 15 and being selected via the user interface 23 in the sample position 24 while keeping said device part in the predetermined orientation 29. The gripper mover 16 is configured to move the gripper 13 between the engaging position 17 and the rejecting position 18 while keeping the gripped device parts 2 located in the gripping positions 15 in the predetermined orientation 29.

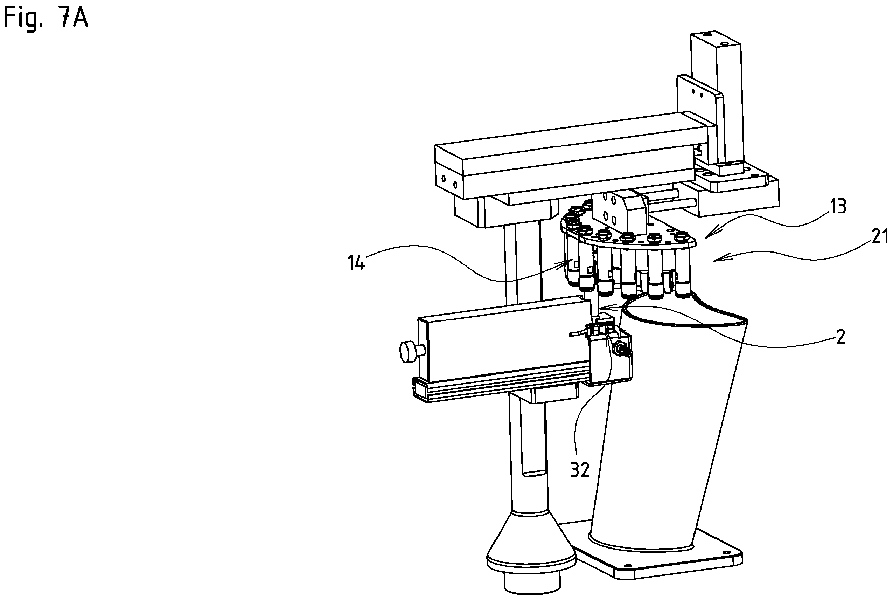

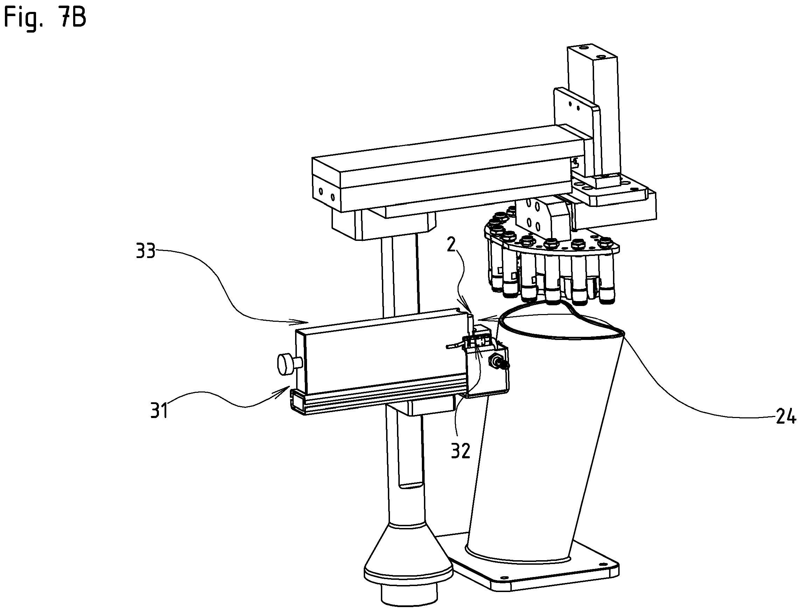

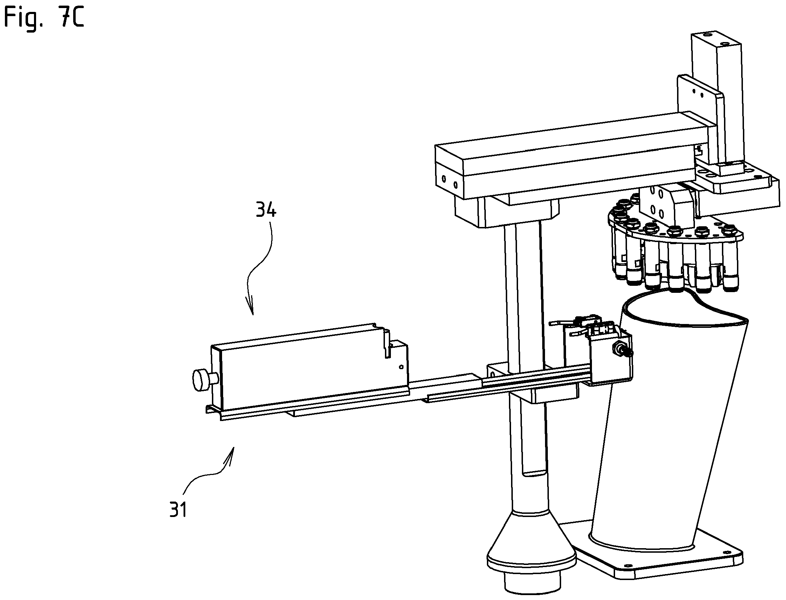

Figure 7A shows the same situation as the figures 6D1 and 6D2 at yet another angle. The figure 7B shows the situation of the figures 6E1 and 6E2. The sample position 24 is defined by a part holder 32 of a sample device 31 located in a retracted position 33. The part holder 32 of the sample device 31 is configured to hold the device part 2. The sample device 31 is configured to move the part holder 32 from the retracted position 33 (see figure 7B) into an extended position 34 (see figure 7C), and vice versa.

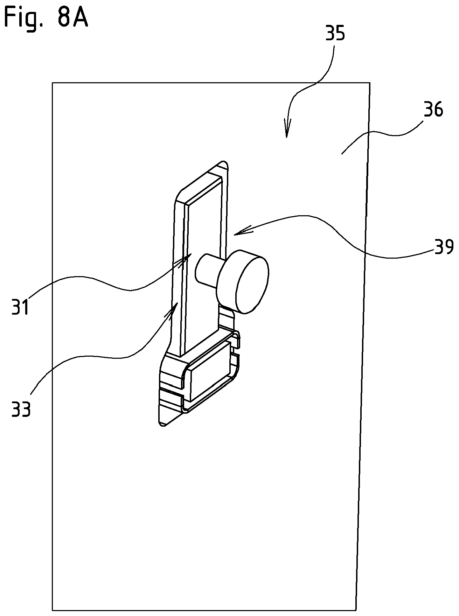

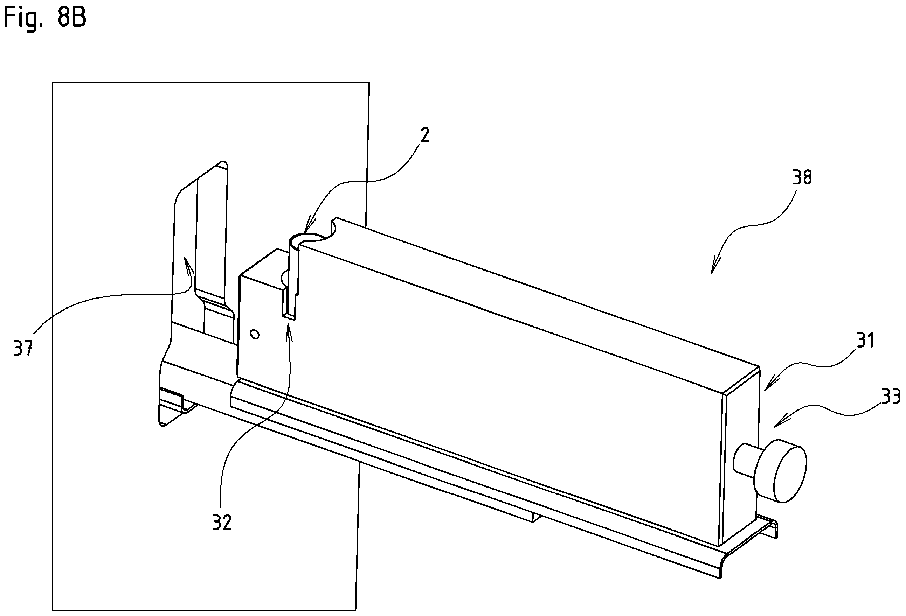

As made clear in the figures 8A and B, the part holder 32 located in the retracted position 33 is located in the system area 37 and the part holder 32 located in the extended position 34 is located in the user area 38.

The part holder 32 is configured to hold the device part in the predetermined orientation 29. The sample device 31 is configured to move the part holder 32 from the retracted position 33 into the extended position 34 while keeping the device part held by the part holder 32 in the predetermined orientation 29.

The gripper 13 is shown in detail in the figures 9A-C. Each gripping position of the gripper 13 is located between one of the gripping members 14 and an associated support surface 40. Each gripping member 14 comprises a pushing surface 41 which is movable from a receiving position 42 at a receiving distance 43 from its associated support surface 40 into a pushing position 44 at a smaller pushing distance 45 from its associated support surface 40, and vice versa.

The gripper 13 is configured to receive the device parts 2 of the batch 5 located in the isolating positions 11 when the pushing surfaces 41 of the gripping members 14 are located in the receiving position 42 and to grip the device parts 2 of the batch 5 located in the isolating positions 11 when the pushing surfaces 41 of the gripping members 14 are located in the pushing position 44. The gripper 13 clamps device parts 2 between gripping members 14 with the pushing surfaces 41 located in the pushing position 44 and the associated support surfaces 40. The associated support surfaces 40 partly surround the device parts 2.

Each gripping member 14 comprises a bellow 46 having an exterior surface 47 which forms the pushing surface 41 of said gripping member 14. The system 1 comprises a fluid pressure device 48 connected to the bellows 46 to individually adjust a fluid pressure in the bellows 46 in order to move the pushing surfaces 41 of the bellows 46 from the receiving position 42 into the pushing position 44, and vice versa. The fluid pressure device 48 is controlled by the controller 10. The fluid pressure device 48 is via fluid ducts 101 connected to fluid connectors 56 of the gripper 13.

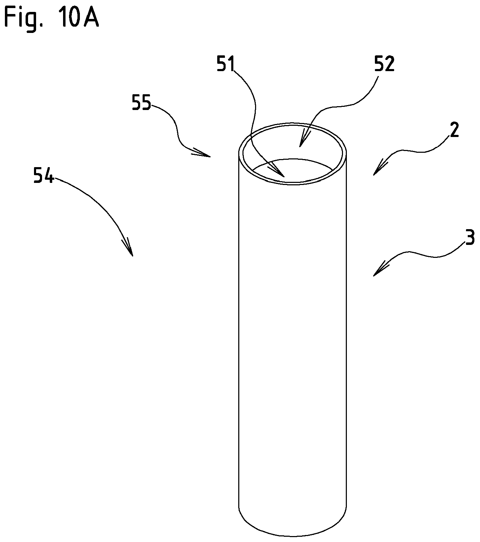

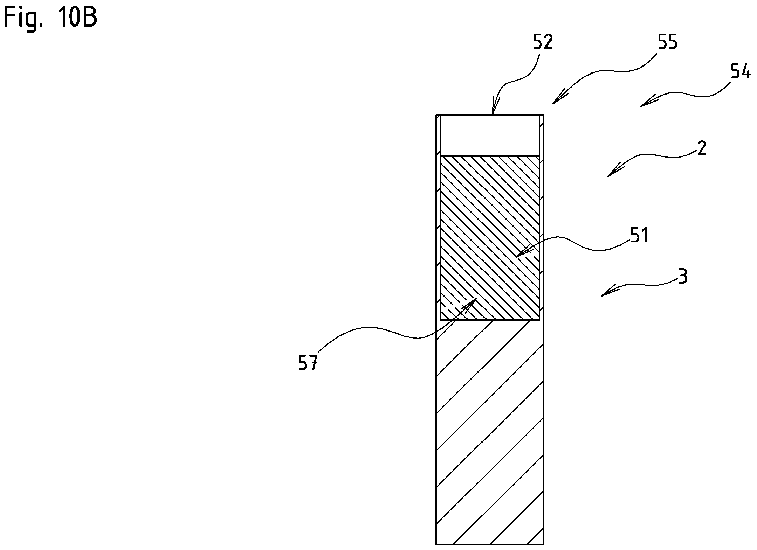

The device part 2 is a cartridge 3 and shown in detail in the figures 10A and B. The device parts 2 of the batch 5 comprise a fluid chamber 51 to hold the fluid 57 and a filling opening 52 having an open connection with the fluid chamber 51 and an surrounding area 54 of the device part 2. The filling opening 52 is located at an upper part 55 of the device part 2.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

It will be apparent to those skilled in the art that various modifications can be made to the system without departing from the scope as defined in the claims.

## Claims

1. System (1) for processing device parts (2) of simulated smoking devices, such as cartridges (3) of electronic cigarettes, said system comprising;
- a processing station (4) to perform a processing operation on each of the device parts of a batch (5) of device parts, which batch has a batch number of device parts being larger than one,
- an evaluation station (6) to evaluate the result of the processing operation on each device part of the batch, which evaluation station is configured to provide an evaluation signal for each device part of the batch,
- a transport device (7) to move the device parts of the batch along a production trajectory (8), which production trajectory extends through the processing station, the evaluation station and an isolating station (9),
- a controller (10) which is in communication with the evaluation station and the isolating station, wherein:
-- the transport device is configured to position the processed device parts of the batch in an isolating number of isolating positions (11) located in an isolating trajectory part (12) of the production trajectory, which isolating trajectory part extends through the isolating station,
-- the isolating station comprises a gripper (13) having gripping members (14) defining a gripping number of gripping positions (15) of the gripper, and
-- the gripper is configured to grip with the gripping members device parts located in the gripping positions, **characterized in that**
-- the isolating station comprises a gripper mover (16) configured to move the gripper from an engaging position (17) into a rejecting position (18), and vice versa,
-- in the engaging position of the gripper, the device parts of the batch located in the isolating positions are also located in the gripping positions of the gripper,
-- the rejecting position of the gripper is located at a rejecting distance (19) from the engaging position and allows the gripper to discharge gripped device parts into a rejection area (20),
-- the controller is configured to determine on the basis of the evaluation signals on which of the device parts of the batch located in the isolating positions the processing station has not correctly carried out the processing operation,
-- the isolating station is configured to grip with the gripper and based on the determination of the controller one or more device parts of the batch located in the isolating positions on which the processing operation has not been carried out correctly by the processing station and to discharge said gripped one or more device parts into the rejection area,
-- the gripper mover is configured to also move the gripper from the engaging position into a testing position (21), and vice versa,
-- the testing position is located at a sample distance (22) from the engaging position and differs from the rejecting position,
-- the system comprises a user interface (23) allowing a user to select one of the device parts of the batch, which user interface is in communication with the controller and configured to provide a selection signal,
-- the controller is configured to determine on the basis of the selection signal which one of the device parts of the batch has been selected via the user interface, and
-- the isolating station is configured to grip with the gripper and based on the determination of the controller the one of the device parts of the batch being selected via the user interface and located in one of the isolating positions in order to positon said gripped device part in a sample position (24).

2. System according to claim 1, wherein;
- the controller is in communication with the transport device,
- one of the isolating positions defines a predetermined selecting position (25)
- the controller and the transport device are configured to position the one of the device parts being selected via the user interface in the predetermined selecting position, and
- the isolating station is configured to grip with the gripper the one of the device parts of the batch located in the predetermined selecting position and being selected via the user interface in order to positon said gripped device part in the sample area.

3. System according to claim 1 or 2, wherein the directions of movement of the gripper between and into the engaging position and the rejecting position and between and into the engaging position and the testing position all extend in a virtual flat plane (27), wherein optionally the engaging position, the rejecting position, the engaging position and the sample position are located in the virtual flat plane and/or the virtual flat plane is located at a fixed position along the production trajectory.

4. System according to any one of the preceding claims, wherein the transport device is configured to hold the device parts of the batch during the movement along the production trajectory in a predetermined orientation (29), such as in an upright orientation, wherein optionally the gripper is configured to hold the gripped device parts located in the gripping positions in the predetermined orientation and/or the gripper mover is configured to move the gripper between the engaging position and the testing position while keeping the gripped device part located in the gripping position and being selected via the user interface in the predetermined orientation and/or the gripper mover is configured to, when located in the testing position, position the gripped device part located in the gripping position and being selected via the user interface in the sample position while keeping said device part in the predetermined orientation and/or the gripper mover is configured to move the gripper between the engaging position and the rejecting position while keeping the gripped device parts located in the gripping positions in the predetermined orientation.

5. System according to any one of the preceding claims, wherein;
- the system comprises a sample device (31) having a part holder to hold one of the device parts,
- the sample device is configured to move the part holder from a retracted position (33) into an extended position (34), and vice versa,
- the sample position is defined by the part holder located in the retracted position,
- the system comprises a safety cover (35) forming a safety boundary | (36) between a system area (37) in which the transport device, the processing station, the evaluation station, and the isolating station are located, and a user area (38),
- the safety cover comprises a sample opening (39) through which the sample device extends and
- the part holder located in the retracted position is located in the system area and the part holder located in the extended position is located in the user area, and
- wherein optionally the part holder is configured to hold the device part in the predetermined orientation and/or the sample device is configured to move the part holder from the retracted position into the extended position while keeping the device part held by the part holder in the predetermined orientation.

6. System according to any one of the preceding claims, wherein;
- each gripping position of the gripper is located between one of the gripping members and an associated support surface (40), and
- each gripping member comprises a pushing surface (41) which is movable from a receiving position (42) at a receiving distance (43) from its associated support surface into a pushing position (44) at a smaller pushing distance (45) from its associated support surface, and vice versa

7. System according to claim 6, wherein the gripper is configured to receive the device parts of the batch located in the isolating positions when the pushing surfaces of the gripping members are located in the receiving position and to grip the device parts of the batch located in the isolating positions when the pushing surfaces of the gripping members are located in the pushing position.

8. System according to claim 7, wherein the gripper is configured to clamp device parts between gripping members with the pushing surfaces located in the pushing position and the associated support surfaces.

9. System according to any one of the claims 6-8, wherein the associated support surfaces partly surround the device parts.

10. System according to any one of the claims 6-9, wherein;
- each gripping member comprises a bellows (46) having an exterior surface (47) which forms the pushing surface of said gripping member,
- the system comprises a fluid pressure device (48) connected to the bellows to individually adjust a fluid pressure in the bellows in order to move the pushing surfaces of the bellows from the receiving position into the pushing position, and vice versa, and
- the fluid pressure device is controlled by the controller.

11. System according to any one of the preceding claims, wherein the transport device moves the device parts along the production trajectory in an intermittent manner, and wherein optionally the intermittent manner in which transport device moves the device parts along the production trajectory corresponding to the batch number of the batch of device parts.

12. System according to any one of the preceding claims, wherein;
- the isolating number of the isolating positions corresponds to the batch number of the batch of device parts, and
- the gripping number of the gripping positions of the gripper corresponds to the isolating number.

13. System according to any one of the preceding claims, wherein;
- the processing station is a filling station (49) to discharge a predetermined amount of fluid in each of the device parts of the batch of device parts,
- the evaluation station is configured to check a filling characteristic of each device part of the batch, and
- wherein optionally the evaluation station is a weighing station (50) to individually weigh the device parts filled by the filling station, which weighing station provides a measurement signal for each of the device parts, and the controller is configured to determine if the predetermined amount of fluid has been discharged in each of the device parts on the basis of the measurement signals.

14. System according to any one of the preceding claims, wherein the device parts of the batch comprise a fluid chamber (51) to hold the fluid and a filling opening (52) having an open connection with the fluid chamber and an surrounding area (54) of said device parts, and wherein optionally the filling opening is located at an upper part (55) of the device part

15. System according to any one of the preceding claims, wherein;
- the isolating station is configured to grip with the gripper only one or more device parts of the batch located in the isolating positions on which the processing operation has not been carried out correctly by the processing station or only the one of the device parts of the batch being selected via the user interface and located in one of the isolating positions, and
- the transport device is configured to move the device parts which are not gripped by the gripper further along the production trajectory.

## Patentansprüche

1. System (1) zur Verarbeitung von Geräteteilen (2) von Geräten zum simulierten Rauchen, wie beispielsweise Kartuschen (3) von elektronischen Zigaretten, wobei das System umfasst:
- eine Verarbeitungsstation (4) zum Durchführen eines Verarbeitungsvorgangs an jedem der Geräteteile einer Beschickung (5) von Geräteteilen, wobei die Beschickung eine Beschickungszahl von Geräteteilen aufweist, die größer als eins ist,
- eine Auswertestation (6) zum Auswerten des Ergebnisses des Verarbeitungsvorgangs an jedem Geräteteil der Beschickung, wobei die Auswertestation eingerichtet ist, ein Auswertesignal für jedes Geräteteil der Beschickung bereitzustellen,
- eine Transportvorrichtung (7) zum Bewegen der Geräteteile der Beschickung entlang einer Produktionsbahn (8), wobei sich die Produktionsbahn durch die Verarbeitungsstation, die Auswertestation und eine Vereinzelungsstation (9) erstreckt,
- eine Steuereinrichtung (10), die mit der Auswertestation und der Vereinzelungsstation in Verbindung steht, wobei:
-- die Transportvorrichtung eingerichtet ist, die verarbeiteten Geräteteile der Beschickung in einer Vereinzelungs-Anzahl von Vereinzelungspositionen (11) zu positionieren, die sich in einem Vereinzelungs-Bahnabschnitt (12) der Produktionsbahn befinden, wobei sich der Vereinzelungs-Bahnabschnitt durch die Vereinzelungsstation erstreckt,
-- die Vereinzelungsstation einen Greifer (13) umfasst, der Greifelemente (14) aufweist, die eine Greifanzahl von Greifpositionen (15) des Greifers definieren, und
-- der Greifer eingerichtet ist, mit den Greifelementen Geräteteile zu greifen, die in den Greifpositionen angeordnet sind, **dadurch gekennzeichnet, dass**
-- die Vereinzelungsstation einen Greiferbeweger (16) aufweist, der eingerichtet ist, den Greifer von einer Eingriffsposition (17) in eine Auswurfposition (18) zu bewegen und umgekehrt,
-- in der Eingriffsposition des Greifers die Geräteteile der Beschickung, die in den Vereinzelungspositionen angeordnet sind, auch in den Greifpositionen des Greifers angeordnet sind,
-- die Auswurfposition des Greifers sich in einem Auswurfabstand (19) von der Eingriffsposition befindet und es dem Greifer ermöglicht, gegriffene Geräteteile in einen Auswurfbereich (20) abzugeben,
-- die Steuereinrichtung eingerichtet ist, auf der Grundlage der Auswertungssignale zu bestimmen, an welchen der Geräteteile der Beschickung, die in den Vereinzelungspositionen angeordnet sind, die Verarbeitungsstation den Verarbeitungsvorgang nicht korrekt ausgeführt hat,
-- die Vereinzelungsstation eingerichtet ist, mit dem Greifer und auf Grundlage der Bestimmung der Steuereinrichtung ein oder mehrere Geräteteile der in den Vereinzelungspositionen angeordneten Beschickung, an denen der Verarbeitungsvorgang von der Verarbeitungsstation nicht korrekt ausgeführt wurde, zu greifen und das eine oder die mehreren gegriffenen Geräteteile in den Auswurfbereich abzugeben,
-- der Greiferbeweger eingerichtet ist, den Greifer auch von der Eingriffsposition in eine Prüfposition (21) zu bewegen und umgekehrt,
-- die Prüfposition in einem Probenabstand (22) von der Eingriffsposition angeordnet ist und sich von der Auswurfposition unterscheidet,
-- das System eine Benutzerschnittstelle (23) umfasst, die es einem Benutzer ermöglicht, eines der Geräteteile der Beschickung auszuwählen, wobei die Benutzerschnittstelle in Kommunikation mit der Steuereinrichtung steht und eingerichtet ist, ein Auswahlsignal bereitzustellen,
-- die Steuereinrichtung eingerichtet ist, auf der Grundlage des Auswahlsignals zu bestimmen, welches der Geräteteile der Beschickung über die Benutzerschnittstelle ausgewählt wurde, und
-- die Vereinzelungsstation eingerichtet ist, mit dem Greifer und auf Grundlage der Bestimmung der Steuereinrichtung dasjenige der Geräteteile der Beschickung zu greifen, das über die Benutzerschnittstelle ausgewählt und in einer der Vereinzelungspositionen angeordnet wurde, um das gegriffene Geräteteil in einer Probenposition (24) zu positionieren.

2. System nach Anspruch 1, wobei:
- die Steuereinrichtung mit der Transportvorrichtung in Verbindung steht,
- eine der Vereinzelungspositionen eine vorbestimmte Auswahlposition (25) definiert,
- die Steuereinrichtung und die Transportvorrichtung eingerichtet sind, das eine der Geräteteile, das über die Benutzerschnittstelle ausgewählt wird, in der vorbestimmten Auswahlposition zu positionieren, und
- die Vereinzelungsstation eingerichtet ist, das eine der Geräteteile der Beschickung, das in der vorbestimmten Auswahlposition angeordnet ist und über die Benutzerschnittstelle ausgewählt wird, mit dem Greifer zu greifen, um das gegriffene Geräteteil in dem Probenbereich zu positionieren.

3. System nach Anspruch 1 oder 2, wobei sich die Bewegungsrichtungen des Greifers zwischen den und in die Eingriffsposition und die Auswurfposition und zwischen den und in die Eingriffsposition und die Prüfposition alle in einer virtuellen flachen Ebene (27) erstrecken, wobei wahlweise die Eingriffsposition, die Auswurfposition, die Eingriffsposition und die Probenposition in der virtuellen flachen Ebene liegen und/oder die virtuelle flache Ebene sich an einer festen Position entlang der Produktionsbahn befindet.

4. System nach einem der vorangegangenen Ansprüche, wobei die Transportvorrichtung eingerichtet ist, die Geräteteile der Beschickung während der Bewegung entlang der Produktionsbahn in einer vorbestimmten Ausrichtung (29), beispielsweise in einer aufrechten Ausrichtung, zu halten, wobei wahlweise der Greifer eingerichtet ist, die gegriffenen Geräteteile, die in den Greifpositionen angeordnet sind, in der vorbestimmten Ausrichtung zu halten und/oder der Greiferbeweger eingerichtet ist, den Greifer zwischen der Eingriffsposition und der Prüfposition zu bewegen, während das gegriffene Geräteteil, das in der Greifposition angeordnet ist und über die Benutzerschnittstelle ausgewählt wird, in der vorbestimmten Ausrichtung gehalten wird und/oder der Greiferbeweger so eingerichtet ist, dass er, wenn er in der Prüfposition angeordnet, das ergriffene Geräteteil, das in der Greifposition angeordnet ist und über die Benutzerschnittstelle ausgewählt wird, in der Probenposition positioniert, während das Geräteteil in der vorbestimmten Ausrichtung gehalten wird und/oder der Greiferbeweger eingerichtet ist, den Greifer zwischen der Eingriffsposition und der Auswurfposition zu bewegen, während die ergriffenen Geräteteile, die sich in den Greifpositionen befinden, in der vorbestimmten Ausrichtung gehalten werden.

5. System nach einem der vorangegangenen Ansprüche, wobei:
- das System eine Probenvorrichtung (31) mit einem Teilehalter zum Halten eines der Vorrichtungsteile umfasst,
- die Probenvorrichtung eingerichtet ist, den Teilehalter aus einer eingefahrenen Position (33) in eine ausgefahrene Position (34) zu bewegen und umgekehrt,
- die Probenposition durch den in der eingefahrenen Position angeordneten Teilehalter definiert ist,
- das System eine Sicherheitsabdeckung (35) umfasst, die eine Sicherheitsabgrenzung (36) zwischen einem Systembereich (37), in dem die Transportvorrichtung, die Verarbeitungsstation, die Auswertestation und die Vereinzelungsstation angeordnet sind, und einem Benutzerbereich (38) bildet,
- die Sicherheitsabdeckung eine Probenöffnung (39) umfasst, durch die sich die Probenvorrichtung erstreckt, und
- der in der eingefahrenen Position angeordnete Teilehalter in dem Systembereich und der in der ausgefahrenen Position angeordnete Teilehalter in dem Benutzerbereich angeordnet ist, und
- wobei wahlweise der Teilehalter eingerichtet ist, das Geräteteil in der vorbestimmten Ausrichtung zu halten und/oder die Probenvorrichtung eingerichtet ist, den Teilehalter von der eingefahrenen Position in die ausgefahrene Position zu bewegen, während das von dem Teilehalter gehaltene Geräteteil in der vorbestimmten Ausrichtung gehalten wird.

6. System nach einem der vorangegangenen Ansprüche, wobei:
- jede Greifposition des Greifers zwischen einem der Greifelemente und einer zugeordneten Auflagefläche (40) angeordnet ist, und
- jedes Greifelement eine Schiebefläche (41) umfasst, die aus einer Aufnahmeposition (42) in einem Aufnahmeabstand (43) von der ihr zugeordneten Auflagefläche in eine Schiebeposition (44) in einem geringeren Schiebeabstand (45) von der ihr zugeordneten Auflagefläche bewegbar ist, und umgekehrt.

7. System nach Anspruch 6, wobei der Greifer so eingerichtet ist, dass er die in den Vereinzelungspositionen angeordneten Geräteteile der Beschickung aufnimmt, wenn die Schiebeflächen der Greifelemente in der Aufnahmeposition angeordnet sind, und dass er die in den Vereinzelungspositionen angeordneten Geräteteile der Beschickung greift, wenn die Schiebeflächen der Greifelemente in der Schiebeposition angeordnet sind.

8. System nach Anspruch 7, wobei der Greifer eingerichtet ist, Geräteteile zwischen Greifelementen mit den in der Schiebeposition angeordneten Schiebeflächen und den zugeordneten Auflageflächen einzuklemmen.

9. System nach einem der Ansprüche 6 bis 8, wobei die zugeordneten Auflageflächen die Geräteteile teilweise umgeben.

10. System nach einem der Ansprüche 6 bis 9, wobei:
- jedes Greifelement einen Faltenbalg (46) umfasst, der eine Außenfläche (47) aufweist, die die Schiebefläche des Greifelements bildet,
- das System eine Fluiddruckvorrichtung (48) aufweist, die mit dem Faltenbalg verbunden ist, um einen Fluiddruck in dem Faltenbalg individuell einzustellen, um die Schiebeflächen des Faltenbalgs von der Aufnahmeposition in die Schiebeposition und umgekehrt zu bewegen, und
- die Fluiddruckvorrichtung von der Steuereinrichtung gesteuert wird.

11. System nach einem der vorangegangenen Ansprüche, wobei die Transportvorrichtung die Geräteteile intermittierend entlang der Produktionsbahn bewegt, und wobei wahlweise die intermittierende Art und Weise, in der die Transportvorrichtung die Geräteteile entlang der Produktionsbahn bewegt, der Beschickungszahl der Beschickung von Geräteteilen entspricht.

12. System nach einem der vorangegangenen Ansprüche, wobei:
- die Vereinzelungs-Anzahl der Vereinzelungspositionen der Beschickungszahl der Beschickung von Geräteteilen entspricht, und
- die Greifanzahl der Greifpositionen des Greifers der Vereinzelungs-Anzahl entspricht.

13. System nach einem der vorangegangenen Ansprüche, wobei:
- die Verarbeitungsstation eine Füllstation (49) ist, um in jedes der Geräteteile der Beschickung von Geräteteilen eine vorbestimmte Fluidmenge abzugeben,
- die Auswertestation eingerichtet ist, ein Füllmerkmal eines jeden Geräteteils der Beschickung zu überprüfen, und
- wobei wahlweise die Auswertestation eine Wägestation (50) ist, um die von der Füllstation gefüllten Geräteteile einzeln zu wiegen, wobei die Wägestation für jedes der Geräteteile ein Messsignal aufweist, und die Steuereinrichtung eingerichtet ist, anhand der Messsignale zu ermitteln, ob die vorbestimmte Fluidmenge in ein jedes der Geräteteile abgegeben wurde.

14. System nach einem der vorangegangenen Ansprüche, wobei die Geräteteile der Beschickung eine Fluidkammer (51) zur Aufnahme des Fluids und eine Einfüllöffnung (52) umfassen, die eine offene Verbindung mit der Fluidkammer und einem Umgebungsbereich (54) der Geräteteile aufweist, und
wobei wahlweise die Einfüllöffnung an einem oberen Teil (55) des Geräteteils angeordnet ist.

15. System nach einem der vorangegangenen Ansprüche, wobei:
- die Vereinzelungsstation eingerichtet ist, mit dem Greifer nur eines oder mehrere Geräteteile der Beschickung zu greifen, die in den Vereinzelungspositionen angeordnet sind, an denen der Verarbeitungsvorgang von der Verarbeitungsstation nicht korrekt ausgeführt wurde, oder nur das eine der Geräteteile der Beschickung, das über die Benutzerschnittstelle ausgewählt wurde und in einer der Vereinzelungspositionen angeordnet ist, und
- die Transporteinrichtung eingerichtet ist, die Geräteteile, die nicht von dem Greifer gegriffen werden, weiter entlang der Produktionsbahn zu bewegen.

## Revendications

1. Système (1) pour traiter des parties de dispositif (2) de dispositifs à fumer simulés, tels que des cartouches (3) de cigarettes électroniques, ledit système comprenant :
- une station de traitement (4) pour effectuer une opération de traitement sur chacune des parties de dispositif d'un lot (5) de parties de dispositif, lequel lot a un nombre de lot de parties de dispositif supérieur à un,
- une station d'évaluation (6) pour évaluer le résultat de l'opération de traitement sur chaque partie de dispositif du lot, laquelle station d'évaluation est configurée pour émettre un signal d'évaluation pour chaque partie de dispositif du lot,
- un dispositif de transport (7) pour déplacer les parties de dispositif du lot le long d'une trajectoire de production (8), laquelle trajectoire de production s'étend à travers la station de traitement, la station d'évaluation et une station d'isolement (9),
- un contrôleur (10) qui est en communication avec la station d'évaluation et la station d'isolement, dans lequel :
- le dispositif de transport est configuré pour positionner les parties de dispositif traitées du lot dans un nombre isolant de positions d'isolement (11) situées dans une partie de trajectoire d'isolement (12) de la trajectoire de production, laquelle partie de trajectoire d'isolement s'étend à travers la station d'isolement,
- la station d'isolement comprend un préhenseur (13) ayant des éléments de préhension (14) définissant un nombre de préhension de positions de préhension (15) du préhenseur, et
- le préhenseur est configuré pour saisir avec les éléments de préhension des parties de dispositif situées dans les positions de préhension, **caractérisé en ce que**
- la station d'isolement comprend un dispositif de déplacement de préhenseur (16) configuré pour déplacer le préhenseur d'une position d'engagement (17) à une position de rejet (18), et vice versa,
- dans la position d'engagement du préhenseur, les parties de dispositif du lot situées dans les positions d'isolement sont également situées dans les positions de préhension du préhenseur,
- la position de rejet du préhenseur est située à une distance de rejet (19) de la position d'engagement et permet au préhenseur de décharger les parties de dispositif saisies dans une zone de rejet (20),
- le contrôleur est configuré pour déterminer, sur la base des signaux d'évaluation, sur quelles parties de dispositif du lot situées dans les positions d'isolement la station de traitement n'a pas effectué correctement l'opération de traitement,
- la station d'isolement est configurée pour saisir avec le préhenseur et sur la base de la détermination du contrôleur une ou plusieurs parties de dispositif du lot situées dans les positions d'isolement sur lesquelles l'opération de traitement n'a pas été effectuée correctement par la station de traitement et pour décharger lesdites une ou plusieurs parties de dispositif saisies dans la zone de rejet,
- le dispositif de déplacement du préhenseur est configuré pour déplacer également le préhenseur de la position d'engagement à une position de test (21), et vice versa,
- la position de test est située à une distance d'échantillonnage (22) de la position d'engagement et diffère de la position de rejet,
- le système comprend une interface utilisateur (23) permettant à un utilisateur de sélectionner l'une des parties du dispositif du lot, laquelle interface utilisateur est en communication avec le contrôleur et configurée pour fournir un signal de sélection,
- le contrôleur est configuré pour déterminer, sur la base du signal de sélection, laquelle des parties du dispositif du lot a été sélectionnée via l'interface utilisateur, et
- la station d'isolement est configurée pour saisir avec le préhenseur et sur la base de la détermination du contrôleur l'une des parties de dispositif du lot qui a été sélectionnée via l'interface utilisateur et située dans l'une des positions d'isolement afin de positionner ladite partie de dispositif saisie dans une position d'échantillonnage (24).

2. Système selon la revendication 1, dans lequel ;
- le contrôleur est en communication avec le dispositif de transport,
- l'une des positions d'isolement définit une position de sélection (25) prédéterminée,
- le contrôleur et le dispositif de transport sont configurés pour positionner l'une des parties du dispositif en cours de sélection via l'interface utilisateur dans la position de sélection prédéterminée, et
- la station d'isolement est configurée pour saisir avec le préhenseur l'une des parties de dispositif du lot située dans la position de sélection prédéterminée et étant sélectionnée via l'interface utilisateur afin de positionner ladite partie de dispositif saisie dans la zone d'échantillonnage.

3. Système selon la revendication 1 ou 2, dans lequel les directions de mouvement du préhenseur entre et dans la position d'engagement et la position de rejet et entre et dans la position d'engagement et la position de test s'étendent toutes dans un plan plat virtuel (27), dans lequel optionnellement la position d'engagement, la position de rejet, la position d'engagement et la position d'échantillonnage sont situées dans le plan plat virtuel et/ou le plan plat virtuel est situé à une position fixe le long de la trajectoire de production.

4. Système selon l'une quelconque des revendications précédentes, dans lequel le dispositif de transport est configuré pour maintenir les parties de dispositif du lot pendant le déplacement le long de la trajectoire de production dans une orientation prédéterminée (29), telle qu'une orientation verticale, dans lequel, optionnellement, le préhenseur est configuré pour maintenir les parties de dispositif saisies situées dans les positions de préhension dans l'orientation prédéterminée et/ou le dispositif de déplacement du préhenseur est configuré pour déplacer le préhenseur entre la position d'engagement et la position de test tout en maintenant la partie de dispositif saisie située dans la position de préhension et étant sélectionnée via l'interface utilisateur dans l'orientation prédéterminée et/ou le dispositif de déplacement du préhenseur est configuré pour, lorsqu'il est situé dans la position de test, positionner la partie de dispositif saisie située dans la position de préhension et étant sélectionnée via l'interface utilisateur dans la position d'échantillonnage tout en maintenant ladite partie de dispositif dans l'orientation prédéterminée et/ou dans lequel le dispositif de déplacement du préhenseur est configuré pour déplacer le préhenseur entre la position d'engagement et la position de rejet tout en maintenant les parties de dispositif saisies situées dans les positions de préhension dans l'orientation prédéterminée.

5. Système selon l'une quelconque des revendications précédentes, dans lequel ;
- le système comprend un dispositif d'échantillonnage (31) ayant un porte-pièce pour maintenir l'une des parties du dispositif,
- le dispositif d'échantillonnage est configuré pour déplacer le porte-pièce d'une position rétractée (33) à une position étendue (34), et vice versa,
- la position d'échantillonnage est définie par le porte-pièce situé dans la position rétractée,
- le système comprend un couvercle de sécurité (35) formant une frontière de sécurité (36) entre une zone de système (37) dans laquelle le dispositif de transport, la station de traitement, la station d'évaluation et la station d'isolement sont situés, et une zone d'utilisateur (38),
- le couvercle de sécurité comprend une ouverture d'échantillonnage (39) à travers laquelle le dispositif d'échantillonnage s'étend, et
- le porte-pièce situé dans la position rétractée est situé dans la zone de système et le porte-pièce situé dans la position étendue est situé dans la zone d'utilisateur, et
- dans lequel, optionnellement, le porte-pièce est configuré pour maintenir la partie du dispositif dans l'orientation prédéterminée et/ou le dispositif d'échantillonnage est configuré pour déplacer le porte-pièce de la position rétractée à la position étendue tout en maintenant la partie du dispositif saisie par le porte-pièce dans l'orientation prédéterminée.

6. Système selon l'une quelconque des revendications précédentes, dans lequel :
- chaque position de préhension du préhenseur est située entre l'un des éléments de préhension et une surface de support associée (40), et
- chaque élément de préhension comprend une surface de poussée (41) qui est mobile d'une position de réception (42) à une distance de réception (43) de sa surface de support associée vers une position de poussée (44) à une distance de poussée (45) plus faible de sa surface de support associée, et vice versa.

7. Système selon la revendication 6, dans lequel le préhenseur est configuré pour recevoir les parties de dispositif du lot situées dans les positions d'isolement lorsque les surfaces de poussée des éléments de préhension sont situées dans la position de réception et pour saisir les parties de dispositif du lot situées dans les positions d'isolement lorsque les surfaces de poussée des éléments de préhension sont situées dans la position de poussée.

8. Système selon la revendication 7, dans lequel le dispositif de préhension est configuré pour serrer les parties de dispositif entre les éléments de préhension dont les surfaces de poussée sont situées dans la position de poussée et les surfaces de support associées.

9. Système selon l'une quelconque des revendications 6 à 8, dans lequel les surfaces de support associées entourent partiellement les parties du dispositif.

10. Système selon l'une quelconque des revendications 6 à 9, dans lequel ;
- chaque élément de préhension comprend un soufflet (46) ayant une surface extérieure (47) qui forme la surface de poussée dudit élément de préhension,
- le système comprend un dispositif de pression de fluide (48) relié au soufflet pour ajuster individuellement une pression de fluide dans le soufflet afin de déplacer les surfaces de poussée du soufflet de la position de réception à la position de poussée, et vice versa, et
- le dispositif de pression de fluide est commandé par le contrôleur.

11. Système selon l'une quelconque des revendications précédentes, dans lequel le dispositif de transport déplace les parties du dispositif le long de la trajectoire de production de manière intermittente, et dans lequel, facultativement, la manière intermittente selon laquelle le dispositif de transport déplace les parties du dispositif le long de la trajectoire de production correspond au numéro de lot du lot de parties du dispositif.

12. Système selon l'une quelconque des revendications précédentes, dans lequel ;
- le numéro d'isolement des positions d'isolement correspond au numéro de lot du lot de parties de dispositif, et
- le numéro de préhension des positions de préhension du préhenseur correspond au numéro d'isolement.

13. Système selon l'une quelconque des revendications précédentes, dans lequel ;
- la station de traitement est une station de remplissage (49) pour déverser une quantité prédéterminée de fluide dans chacune des parties du dispositif du lot de parties du dispositif,
- la station d'évaluation est configurée pour vérifier une caractéristique de remplissage de chaque partie de dispositif du lot, et
- dans lequel, optionnellement, la station d'évaluation est une station de pesée (50) pour peser individuellement les parties de dispositif remplies par la station de remplissage, laquelle station de pesée fournit un signal de mesure pour chacune des parties de dispositif, et le contrôleur est configuré pour déterminer si la quantité prédéterminée de fluide a été déchargée dans chacune des parties de dispositif sur la base des signaux de mesure.

14. Système selon l'une quelconque des revendications précédentes, dans lequel les parties de dispositif du lot comprennent une chambre de fluide (51) pour contenir le fluide et une ouverture de remplissage (52) ayant une connexion ouverte avec la chambre de fluide et une zone environnante (54) desdites parties de dispositif, et dans lequel, optionnellement, l'ouverture de remplissage est située au niveau d'une partie supérieure (55) de la partie de dispositif.

15. Système selon l'une quelconque des revendications précédentes, dans lequel ;
- la station d'isolement est configurée pour saisir avec le préhenseur uniquement une ou plusieurs parties de dispositif du lot situées dans les positions d'isolement sur lesquelles l'opération de traitement n'a pas été effectuée correctement par la station de traitement ou uniquement celle des parties de dispositif du lot étant sélectionnée via l'interface utilisateur et située dans une des positions d'isolement, et
- le dispositif de transport est configuré pour déplacer les parties de dispositif qui ne sont pas saisies par le préhenseur plus loin le long de la trajectoire de production.
